# EUROPEAN PATENT SPECIFICATION

(11) **EP 2 682 677 B1**
(45) Date of publication and mention of the grant of the patent: **08.05.2019**
(21) Application number: 11859815.0
(22) Date of filing: 10.11.2011
(51) Int. Cl.: F23J 15/00, F23J 15/06, B01D 53/34, B01D 53/50, B01D 53/56, B01D 53/77, F28F 9/013

(54) **HEAT EXCHANGER**
WÄRMETAUSCHER
ÉCHANGEUR DE CHALEUR

(30) Priority: 28.02.2011 JP 2011043313
(43) Date of publication of application: 08.01.2014
(73) Proprietor: Mitsubishi Heavy Industries, Ltd., Tokyo 108-8215 (JP)
(72) Inventor: KAMIYAMA, Naoyuki, Tokyo 108-8215 (JP); MIYACHI, Tsuyoshi, Tokyo 108-8215 (JP); OKAMOTO, Takuya, Tokyo 108-8215 (JP); SATO, Yuichiro, Tokyo 108-8215 (JP)
(74) Representative: Intès, Didier Gérard André
(86) International application number: PCT/JP2011/075982
(87) International publication number: WO 2012/117621

(56) References cited:
- JP-A- 3 230 097
- JP-A- 6 039 244
- JP-A- 58 221 381
- JP-A- H10 311 526
- JP-A- 2007 292 436
- JP-U- S6 446 601
- US-A- 4 255 841
- US-A1- 2002 037 214

## Description

### Field

The present invention relates to a heat exchanger in an air pollution control system.

### Background

As a general example of a system configuration, an air pollution control apparatus of a boiler for thermal power plant or chemical plant is disposed in order of denitrification equipment in a flue gas flow channel, an air-preheater air heater, a heat recovery unit of reheating gas-gas heater, a dry electronic precipitator, wet desulfurization equipment, a reheating unit for the gas-gas heater, and a chimney. Here, the gas-gas heater is configured such that the heat recovery unit and the reheating unit are connected to a cool and hot water circulating line to perform a heat exchange with a flue gas through a circulating pump using water as a medium.

In this control apparatus, the flue gas of the boiler is guided to the air heater to be cooled to a temperature of, for example, 130 to 150°C by exchanging heat with combustion air and then is guided to the heat recovery unit of the gas-gas heater to be further cooled. Thereafter, after the flue gas is guided to the electronic precipitator to remove fly ashes, a high-temperature flue gas in an outlet of the electronic precipitator is further cooled to a low temperature by exchanging heat with water and then is guided to the wet desulfurization equipment. In the wet desulfurization equipment, SO₂ contained in the flue gas is absorbed and removed by absorbent which is prepared by dissolving, for example, limestone in the form of slurry and remaining fly ashes in the flue gas are also removed in the gas-solution contact process. Then, the flue gas in which SO₂ and the fly ashes are removed is guided to the reheating unit of the gas-gas heater. Here, the temperature of the flue gas temperature-dropped by SO₂ absorbent and the like in the treatment process of the wet desulfurization equipment is raised by the heat exchange with heat medium water passing through an interior of a pipe disposed in the reheating unit of the gas-gas heater. This causes functions of preventing white smoke generation due to a reduction of the amount of water condensation and improving diffusion efficiency due to temperature rise, when the flue gas is released from the chimney to an atmosphere.

For example, a fin tube heat exchanger has been proposed as a heat exchange method of large-scaled heat recovery unit and reheating unit of the gas-gas heater in coal-fired power plant (Patent Literature 1).
US 4 255 841 discloses condenser construction with delayed tube bundles.
JP H10-311526 discloses a horizontal high temperature air heater and waste treating apparatus.
JP S64-46601 U discloses an exhaust-heat-recovery boiler, wherein it provided the gas duct to the upper part or the side while providing the door which can remove in the one end part of the above-mentioned flue, and the other end communicates a gas duct different from the above.

### Citation List

### Patent Literature

Patent Literature 1: Japanese Laid-open Patent Publication No. 11-304138

### Summary

### Technical Problem

In a case of performing maintenance of heat transfer bundles in a heat exchanger, however, following problems occur.
1) In a case where wear over time occurs due to blast effect of combustion fly ashes to a heat transfer tube of a fin tube heat exchanger in a thermal power plant, or in a case where the composition of the same ashes has adhesive properties and corrosive properties, the ashes are fixed to a heat transfer surface to proceed corrosion of the heat transfer tube, a thickness of the tube is decreased with time.
   When an unplanned stop is caused by massive update or maintenance of the bundles, damage of power sales occurs due to inhibition of a commercial operation. For this reason, leakage of heat medium water has been a very important issue.
2) Further, the plant operation is stopped to repair in a case where the number of leakage locations is large in leakage inspection during operating or in a case where extensive repairs or bundle updates are determined to be necessary.
3) In the related art, in order to draw out a lower bundle, large-scaled module bundles ranging from, for example, 20 to 30 tons per one bundle are lifted one by one in turns from an upper-stage bundle by a crane from openings installed at an upper part of a duct for storing the bundles of the heat exchanger.
   Therefore, it is necessary to draw out even robust bundles that do not require the maintenance.
   Further, in case of requiring a bundle inspection work such as, for example, a residual wall thickness inspection in the interior of the duct, it is necessary to temporarily install an entire-face scaffold on front and rear of all target bundles inside the duct, and a large amount of cost and considerable period are consumed for this.
4) In this case, considerable period is required for a massive repairs or updates of the bundles, and the damage of power sales occurs due to the inhibition of the commercial operation during existence of risks for delaying a regular inspection period of the power plant.
5) Further, in a case of performing the massive repair of the lower-stage side bundle, it is necessary to temporarily place the robust bundle in an open space until re-storing in the duct of which the repair is completed. In this case, it is necessary to ensure the period of this placed space, and the damage risk of the placement space is also generated by curing deficiency depending on weather environment when the temporary placement space is an outdoor space.

In addition, there is a problem that management costs increase even in a curing or an indoor storage.

The present invention has been achieved to solve the above problems, and an object of the present invention is to provide a heat exchanger that can draw out only a specific heat transfer tube bundle to improve work efficiency.

### Solution to Problem

According to a first aspect of the present invention in order to solve the above-mentioned problems, there is provided a heat exchanger according to claim 1.

According to a second aspect of the present invention, there is provided the heat exchanger according to the first aspect, including: back rails provided at back sides of the heat transfer tube bundles, the back side coming in contact with the bundle-bottom-rail. Advantageous Effects of Invention

According to the present invention, since only a specific heat transfer tube bundle can be drawn out, it is possible to reduce a maintenance period, thereby minimizing a regular inspection period.

### Brief Description of Drawings

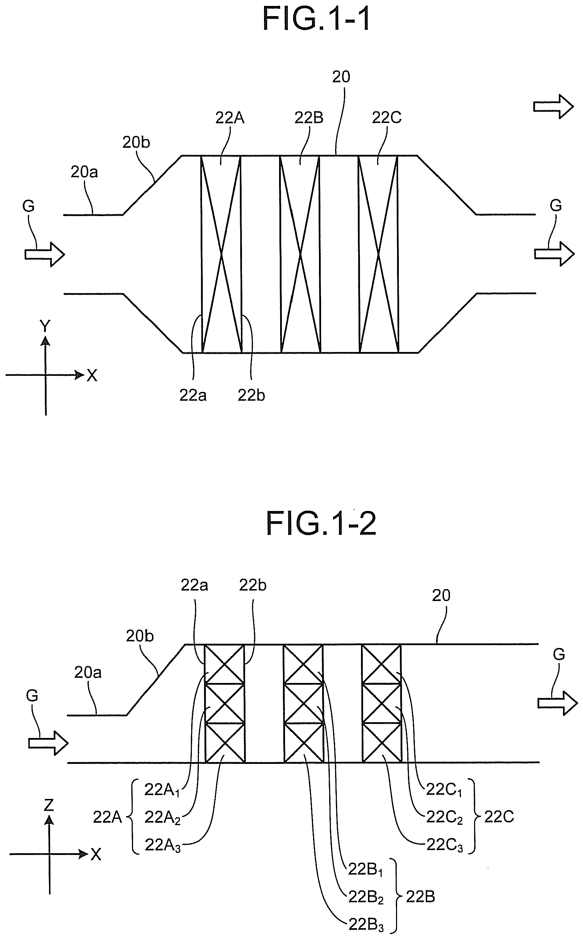

FIG. 1-1 is a schematic view of a heat exchanger.
FIG. 1-2 is a schematic view of the heat exchanger.
FIG. 2-1 is a perspective view illustrating schematically an exterior of a heat exchanger.
FIG. 2-2 is a perspective view illustrating schematically the exterior of the heat exchanger according to Fig. 2-1.
FIG. 3 is a perspective view illustrating schematically an exterior of a heat exchanger according to an embodiment of the invention.
FIG. 4 is a schematic view illustrating main parts of FIG. 3.
FIG. 5 is a schematic view illustrating parts other than the main parts of FIG. 3.
FIG. 6 is a schematic view of an air pollution control system to which the heat exchangers according to the embodiments are applied.
FIG. 7 is a schematic view of the heat exchanger of an air pollution control installation.

### Description of Embodiments

Embodiments of the present invention will be described below in detail with reference to the accompanying drawings. The present invention is not limited to the following embodiments, but may be constituted in combination with each of embodiments in case of several embodiments. In addition, constituent elements in the following embodiments include those that can be easily assumed by persons skilled in the art or that are substantially equivalent.

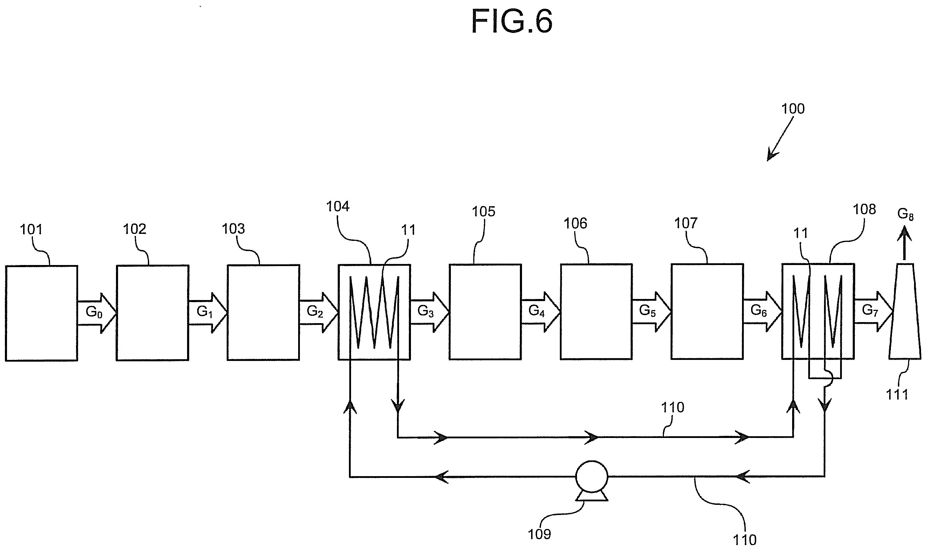

FIG. 6 is a schematic view of an air pollution control system to which heat exchangers according to the present invention are applied.

In a process where a flue gas to be discharged from a boiler 101 of power plants, factories or the like is released from a chimney 111, as illustrated in FIG. 6, an air pollution control system 100 removes nitride oxide (NOx), soot dust, and sulfur oxide (SOx) contained in the flue gas.

Firstly, a flue gas G₀ discharged from the boiler 101 is introduced into denitrification equipment 102 filled with a catalyst. In the denitrification equipment 102, the nitrogen oxide contained in the flue gas G₀ is reduced to water and nitrogen by ammonia (NH₃) injected as a reducing agent to become harmless.

A flue gas G₁ discharged from the denitrification equipment 102 is generally cooled to the temperature of 130°C to 150°C through an air heater (AH) 103.

A flue gas G₂ passed through the air heater 103 is introduced into a heat recovery unit 104 serving as a heat exchanger of gas-gas heater and then is heat-recovered by a heat exchange with a heat medium (for example, water). A temperature of a flue gas G₃ passed through the heat recovery unit 104 becomes approximately 85°C to 110°C to improve dust-collecting capability of an electronic precipitator (EP) 105, for example.

The flue gas G₃ passed through the heat recovery unit 104 is introduced into the electronic precipitator 105 and then the shoot dust therein is removed.

A flue gas G₄ passed through the electronic precipitator 105 is pressurized by an air blower 106 to be driven by an electric motor. In addition, the air blower 106 may not be provided, or may be disposed on a downstream side of a reheating unit 108 of the gas-gas heater.

A flue gas G₅ pressurized by the air blower 106 is introduced into desulfurization equipment 107. In the desulfurization equipment 107, the sulfur oxide contained in the flue gas G₅ is absorbed and removed by an absorbent which is prepared by dissolving limestone in a form of slurry, and gypsum (not illustrated) is produced as a byproduct. Then, the temperature of a flue gas G₆ passed through the desulfurization equipment 107 is generally decreased to the extent of about 50°C.

The flue gas G₆ passed through the
desulfurization equipment 107 is introduced into the reheating unit 108 serving as the heat exchanger of the gas-gas heater. In a process where a heat medium 83 is circulated while coming and going a pair of circulating pipes 110 between the heat recovery unit 104 and the reheating unit 108 by a circulating pump 109, the reheating unit 108 heats the flue gas G₆ by recovery heat which is recovered by the heat recovery unit 104. Here, the flue gas G₆, which has the temperature of about 50°C, at an outlet of the desulfurization equipment 107 is reheated to about 85°C to 110°C with the reheating unit 108, and then is released as a flue gas G₈ from the chimney 111 to an atmosphere.

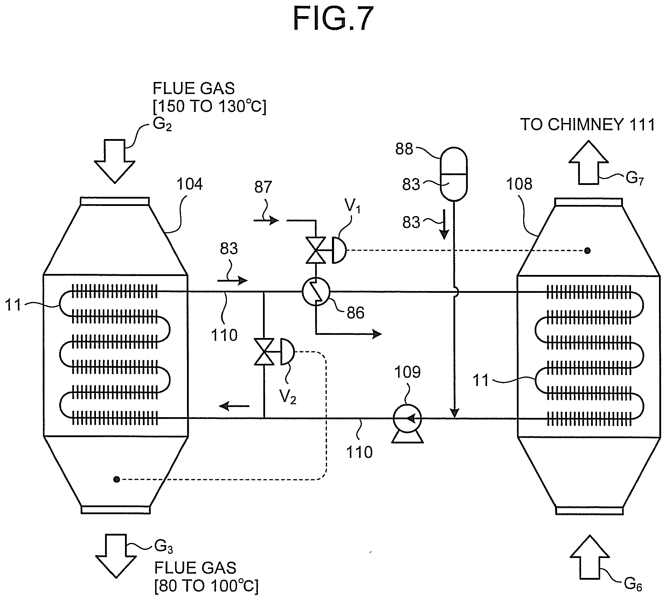

FIG. 7 is a schematic view of a heat exchanger of an air pollution control installation.

As illustrated in FIG. 7, the heat exchanger into which the flue gas G₂ is introduced to exchange heat with the heat medium 83 is provided.

The heat exchanger has the circulating pipe 110 for circulating the heat medium 83 between the heat recovery unit 104 and the reheating unit 108. The heat medium 83 is circulated between the heat recovery unit 104 and the reheating unit 108 through the circulating pipe 110. A surface of the heat medium circulating passage 110 provided in each of the heat recovery unit 104 and the reheating unit 108 is provided with a heat transfer tube 11 on which a plurality of fins are provided. A heat exchanging unit 86 is provided in the heat medium circulating passage 110 to compensate energy, which is equivalent to temperature drop absorbed by radiant heat when the heat medium 83 is circulated, by heating with a steam 87 and to be capable of maintaining and adjusting a medium temperature of the heat medium 83.

The heat medium 83 is supplied to the heat medium circulating passage 110 from a heat medium tank 88. The heat medium 83 is circulated in the circulating passage 110 by the heat medium circulating pump 109. In addition, a supply quantity of the steam 87 is adjusted by an adjusting valve V₁ according to the gas temperature of the purified gas G₆ from the desulfurization equipment 107, the heat medium 83 to be fed into the reheating unit 108 is supplied to the heat recovery unit 104 by an adjusting valve V₂ according to the gas temperature of the flue gas G₃ discharged from the heat recovery unit 104, and thus a supply quantity of the heat medium 83 to be fed into the reheating unit 108 is adjusted. Further, the purified gas G₇ discharged from the reheating unit 108 is discharged from the chimney 111 to the outside.

Hereinafter, the structure of the heat exchanger of the heat recovery unit 104 and the reheating unit 108 will be described with reference to drawings. FIGS. 1-1 and 1-2 are a schematic view of the heat exchanger, respectively.

As illustrated in FIGS. 1-1 and 1-2, the heat exchanger includes a heat transfer tube bundle housing duct 20 in which a plurality of heat transfer tube bundles, that is, a high-temperature heat transfer tube bundle 22A, a middle-temperature heat transfer tube bundle 22B, and a low-temperature heat transfer tube bundle 22C are disposed from an upstream side in an inflowing direction of the flue gas, the heat transfer tube bundles being an aggregation which binds together the heat transfer tube bundles.

Further, the plurality of heat transfer tube bundles 22A (22A₁ to 22A₃), 22B (22B₁ to 22B₃), and 22C (22C₁ to 22C₃) are disposed with a predetermined interval to perform the heat recovery or the heat exchange in a gas flowing direction of the flue gas. In FIG. 1, the flue gas G, a duct inlet part 20a, and an expanded part 20b are illustrated. In addition, an upstream side in a flue gas introducing direction of the heat transfer tube bundle is a front 22a, and a downstream side in the flue gas introducing direction is a rear 22b.

In drawings, an X-direction is the flue gas flowing direction, a Y-direction is an insertion direction of the heat transfer tube bundle, and a Z-direction is a stacked installation direction of the heat transfer tube bundle.

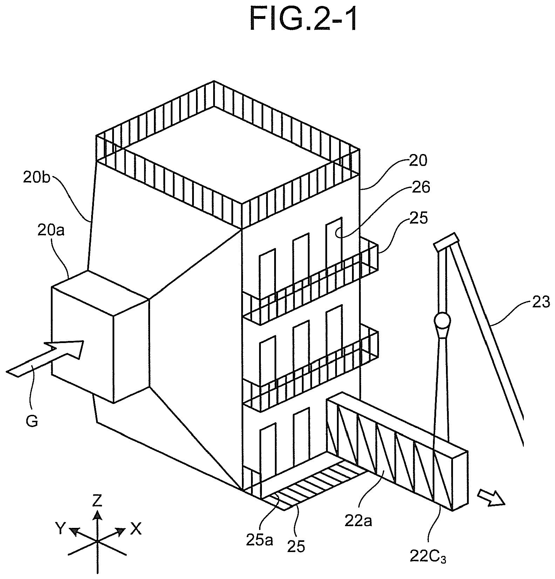

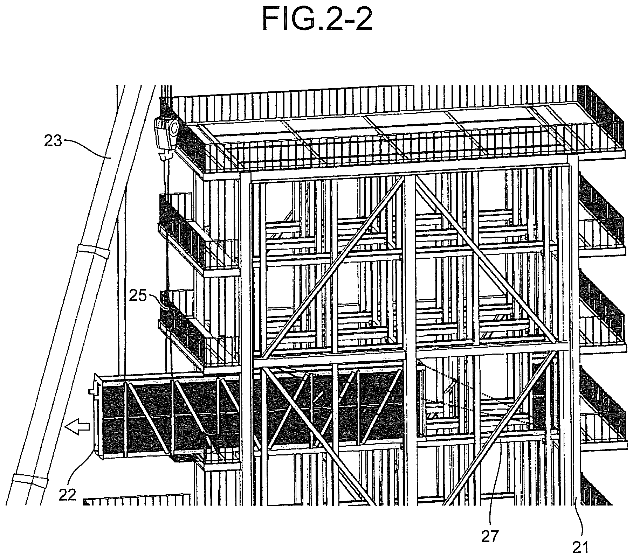

FIGS. 2-1 and 2-2 are perspective views illustrating schematically an exterior of the heat exchanger.

The heat exchanger includes the heat transfer tube bundle housing duct (hereinafter, referred to as a "bundle housing duct") 20 which houses heat transfer tube bundles 22, openings 26 which are provided on a sidewall of the heat transfer tube bundle housing duct 20 to freely insert and remove the heat transfer tube bundles 22, and bottom rails 27 which are provided in a direction perpendicular to the inflowing direction of the flue gas G within the bundle housing duct 20 to freely move the heat transfer tube bundles.

Further, a reference numeral 25 indicates a handrail provided in a framework stage through which persons come and go. Generally, the handrail 25 is vertically stood so that persons do not fall down, but is configured such that the bundles can pass through, as illustrated in FIG. 2-1, since the handrail 25 is provided with a hinge which is movable so as to recline in a horizontal position at the time of taking the heat transfer tube bundles 22 in and out.

Further, a floor 25a of the handrail is configured so as to temporarily place the heat transfer tube bundles 22 when the handrail 25 is reclined.

In drawings, the X-direction is the flue gas flowing direction, the Y-direction is the insertion direction of the heat transfer tube bundle, and the Z-direction is the stacked installation direction of the heat transfer tube bundle.

In a case of specifying the number of leakage locations in a leak test during an operation, the heat transfer tube bundle 22 is set to be drawn out in following manners.

1) In a case of drawing out a specified heat transfer tube bundle (for example, heat transfer tube bundle 22C₃), firstly, the opening 26 is opened and the handrail 25 is reclined.
2) Then, the heat transfer tube bundle 22C₃, which is ranging from 20 to 30 tons per one bundle, is drawn out from the opening 26 while being supported with a crane 23.
3) The heat transfer tube bundles are lifted and temporarily placed on a predetermined position using one crane (not illustrated) when the entire heat transfer tube bundles are come out of the openings 26.

Thus, an operation of drawing out the heat transfer tube bundles from the stacked arrangement of each stage is facilitated.

As a result, it is possible to independently draw out only bundle requiring repair and renewal from each stage of the stage-stacked bundle without drawing out another robust bundle.

At this time, since the bundle-bottom-rail 27 is installed at a position corresponding to a lower part of each bundle in a longitudinal direction inside the duct from a sidewall side to draw out and move the bundle toward the opening, the heat transfer tube bundle is easily drawn out in the longitudinal direction toward the opening of the sidewall on the bundle-bottom-rail 27.

The heat transfer tube bundle loaded on the bundle-bottom-rail 27 is drawn out in the longitudinal direction by, for example, a chain block.

In the heat exchanger according to Fig. 2-1 and Fig. 2-2, since only specified heat transfer tube bundle can be drawn out, it is possible to shorten a maintenance period, resulting in minimizing the regular inspection period.

In other words, in the related art, in order to draw out a lower bundle, a useless work for drawing out even the robust bundle of which the inspection is unnecessary needs to be performed, for example, module bundles ranging from, for example, 20 to 30 tons per one bundle are lifted one by one in turns from an upper-stage bundle by the crane from the opening installed at an upper part of the bundle housing duct for storing the bundle of the heat exchanger, while the present invention can shorten time of about 40% with respect to replacement work of the bundle ranging generally from 20 to 30 tons per one because of drawing out only the specified heat transfer tube bundle.

In addition, since the bundle for requiring a repair is independently drawn out, a location on which the robust bundle is temporarily placed is unnecessary, and thus it is possible to cut a cost by such amount and to also reduce a damage risk during the temporary placement.

Further, in case of requiring a checking work of the heat transfer tube bundle when a plant is stopped, since the inspection is performed by drawing out only target bundle at a place having a good working environment, temporary construction of an entire-face scaffold in the duct is unnecessary and thus it is possible to cut a cost by such amount and to shorten the period.

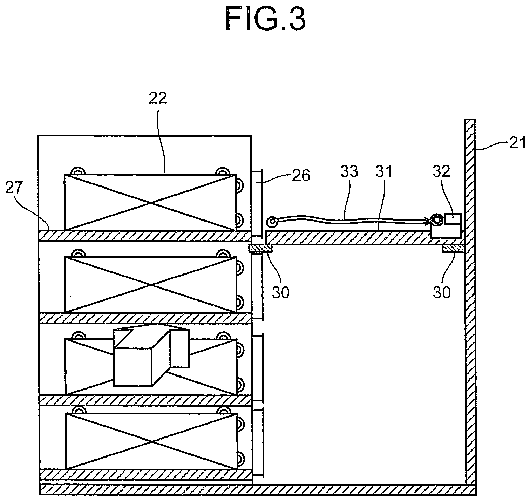

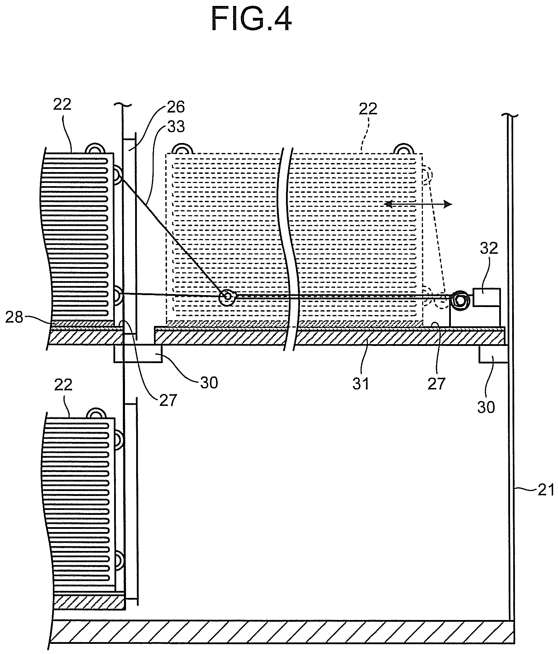

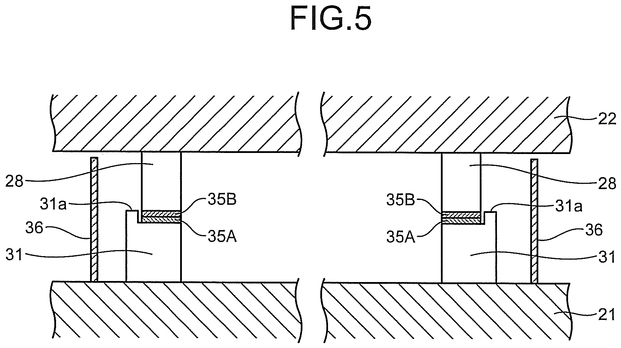

FIG. 3 is a schematic view of a heat exchanger according to an embodiment of the invention. FIGS. 4 and 5 are schematic views illustrating main parts of FIG. 3. The same reference numerals can be denoted to the same members as in the heat exchanger according to Fig. 2-1 and Fig. 2-2 and the description thereof will not be presented.

As illustrated in FIG. 3, the heat exchanger according to this embodiment includes a temporary support part 30 which is detachably provided in a structure (framework) 21 outside the bundle housing duct 20, a moving rail 31 which is supported by the temporary support part 30 to move the heat transfer tube bundle 22, a driving apparatus 32 which draws out the heat transfer tube bundle 22 onto the moving rail 31, and a wire 33.

In the present embodiment, a back rail 28 is provided at a portion which comes in contact with the bottom rail 27 of the heat transfer tube bundle 22.

On the surface of the bottom rail 27 and the back rail 28, thin plates 35A and 35B made of materials having a low friction coefficient are provided, and the heat transfer tube bundle 22 is easily drawn out while sliding the thin plates 35A and 35B.

Accordingly, the drawing-out is facilitated by the moving rail 31 provided outside the bundle housing duct 20 and the driving apparatus 32 such as a winch auxiliary mechanism capable of pulling transversely the heat transfer tube bundle 22.

In order not to derail during the drawing-out, further, a guide member 31a is provided on the moving rail 31.

In addition, an enclosure part 36 is provided at a lateral face of the bottom rail 27, which is provided in the structure 21 inside the bundle housing duct 20, to prevent the mixing of ashes.

At least two cranes are required for the heat exchanger of Fig. 2-1 and Fig. 2-2, but the configuration of the present embodiment requires one crane. Accordingly, it is possible to reduce a maintenance space by such amount.

In addition, by selecting combinations of the materials having the low friction coefficient for the thin plates 35A and 35B, the drawing-out and pushing are facilitated.

Here, examples of the combinations of the materials having the low friction coefficient may include Cr (chrome plating) - Cu (copper alloy) and SUS (bundle frame material) - Cu (copper alloy).

Further, examples of preferable materials with respect to sliding wear· seizure may include a combination of steel (SUS) - hard chrome plating, but are not limited thereto.

In addition, examples of a combination of materials having corrosion resistance may include a combination of annealed steel - SUS material, but are not limited thereto.

Further, since there is a possibility that soot dusts of coal ash or fixing components are attached to the bundle-bottom-rail 27, it may install a protective cover for the bundle-bottom-rail to expose and move the bundle-bottom-rail 27 by removing the cover after stopping the plant.

This can prevent inhibition of bundle maintenance work due to ashes or fixing substances on the rail below the bundle.

In addition, the handrail 25 provided in the framework stage through which persons come and go is vertically stood so that persons do not fall down, but is configured such that the bundles can pass through, as illustrated in FIG. 2-1, since the handrail 25 is provided with the hinge which is movable so as to recline in the horizontal position at the time of taking the heat transfer tube bundle 22 in and out.

As described above, according to the present invention, since a construction period is significantly shortened in repair and renewal constructions of a large-sized heat exchange bundle after a rapid detection of the leakage locations of the heat medium or during the regular inspection period of power plant, it is possible to achieve an improvement of operation rate and thus to achieve an increase of annual energy production of power.

Further, since a massive scaffold set is unnecessary, it is possible to achieve a curtailment of the regular inspection period of the bundle, a significant improvement of maintenance workability, and a reduction of safety risk.

### Reference Signs List

- 20: HEAT TRANSFER TUBE BUNDLE HOUSING DUCT
- 21: STRUCTURE
- 22: HEAT TRANSFER TUBE BUNDLE
- 23: CRANE
- 25: HANDRAIL
- 26: OPENING
- 27: BOTTOM RAIL
- 28: BACK RAIL
- 31: MOVING RAIL
- 31a: GUIDE MEMBER
- 32: DRIVING APPARATUS
- 33: WIRE
- 35A, 35B: THIN PLATE
- 36: ENCLOSURE PART

## Claims

1. A heat exchanger, comprising:
a heat transfer tube bundle housing duct (20) for housing heat transfer tube bundles (22);
openings (26) provided on a sidewall of the heat transfer tube bundle housing duct (20), for freely inserting and removing the heat transfer tube bundles (22);
bundle-bottom-rails (27) provided in a direction perpendicular to an inflowing direction of a flue gas and within the heat transfer tube bundle housing duct (20), for freely moving the heat transfer tube bundles (22);
temporary support parts (30) provided in a structure (21) outside the heat transfer tube bundle housing duct (20);
moving rails (31) supported by the temporary support parts (30), for moving the heat transfer tube bundles (22) ; and
a driving apparatus (32) for drawing out the heat transfer tube bundles (22) onto the moving rails (31), **characterised in that** enclosure parts (36) configured to prevent mixing of ashes are provided at lateral faces of the bundle-bottom-rails (27).

2. The heat exchanger according to claim 1, comprising:
back rails (28) provided at back sides of the heat transfer tube bundles (22), the back side coming in contact with the bundle-bottom-rail (27).

## Patentansprüche

1. Wärmetauscher, umfassend:
einen Wärmeübertragungsrohrbündelaufnahmeschacht (20) zum Aufnehmen von Wärmeübertragungsrohrbündeln (22);
Öffnungen (26), die auf einer Seitenwand des Wärmeübertragungsrohrbündelaufnahmeschachts (20) vorgesehen sind, zum ungehinderten Einführen und Entnehmen der Wärmeübertragungsrohrbündel (22);
Bündelbodenschienen (27), die in einer Richtung senkrecht zu einer Einströmungsrichtung eines Rauchgases und innerhalb des Wärmeübertragungsrohrbündelaufnahmeschachts (20) vorgesehen sind, zum ungehinderten Bewegen der Wärmeübertragungsrohrbündel (22);
temporäre Trageteile (30), die in einer Struktur (21) außerhalb des Wärmeübertragungsrohrbündelaufnahmeschachts (20) vorgesehen sind;
sich bewegende Schienen (31), die von den temporären Trageteilen (30) getragen werden, zum Bewegen der Wärmeübertragungsrohrbündel (22) und
eine Antriebsvorrichtung (32) zum Herausziehen der Wärmeübertragungsrohrbündel (22) auf die sich bewegenden Schienen (31), **dadurch gekennzeichnet, dass** Einfassungsteile (36), die dazu konfiguriert sind, ein Mischen von Aschen zu verhindern, an seitlichen Flächen der Bündelbodenschienen (27) vorgesehen sind.

2. Wärmetauscher nach Anspruch 1, umfassend:
hintere Schienen (28), die an Rückseiten der Wärmeübertragungsrohrbündel (22) vorgesehen sind, wobei die Rückseite mit der Bündelbodenschiene (27) in Kontakt kommt.

## Revendications

1. Echangeur de chaleur comprenant :
un conduit de logement de faisceaux de tubes de transfert de chaleur (20) pour loger les faisceaux de tubes de transfert de chaleur (22) ;
des ouvertures (26) prévues sur une paroi latérale du conduit de logement de faisceaux de tubes de transfert de chaleur (20), pour insérer et retirer librement les faisceaux de tubes de transfert de chaleur (22) ;
des rails inférieurs de faisceau (27) prévus dans une direction perpendiculaire à une direction d'entrée d'un gaz d'évacuation et à l'intérieur du conduit de logement de faisceaux de tubes de transfert de chaleur (20) pour déplacer librement les faisceaux de tubes de transfert de chaleur (22) ;
des parties de support temporaires (30) prévues dans une structure (21) à l'extérieur du conduit de logement de faisceaux de tubes de transfert de chaleur (20) ;
des rails mobiles (31) supportés par les parties de support temporaires (30) pour déplacer les faisceaux de tubes de transfert de chaleur (22) ; et
un appareil d'entraînement (32) pour retirer les faisceaux de tubes de transfert de chaleur (22) sur les rails mobiles (31), **caractérisé en ce que** les parties d'enceinte (36) configurées pour empêcher le mélange des cendres sont prévues au niveau des faces latérales des rails inférieurs de faisceau (27).

2. Echangeur de chaleur selon la revendication 1, comprenant :
des rails arrière (28) prévus au niveau des côtés arrière des faisceaux de tubes de transfert de chaleur (22), le côté arrière venant en contact avec le rail inférieur de faisceau (27).
